(19) Europäisches Patentamt
European Patent Office
Office européen des brevets

(11) EP 0 657 484 B1

(12) FASCICULE DE BREVET EUROPEEN

(45) Date de publication et mention de la délivrance du brevet:
**12.11.2003 Bulletin 2003/46**

(51) Int Cl.[7]: **C08G 65/14**, C08G 65/22, H01M 6/18, H01M 10/40

(21) Numéro de dépôt: **94402756.4**

(22) Date de dépôt: **02.12.1994**

(54) **Copolyéthers réticulables et leur utilisation comme électrolytes polymères**

Vernetzbare Copolyether und ihre Verwendung als polymerische Elektrolyten

Crosslinkable copolyethers and their use as polymeric electrodes

(84) Etats contractants désignés:
**DE FR GB IT**

(30) Priorité: **09.12.1993 CA 2111047**

(43) Date de publication de la demande:
**14.06.1995 Bulletin 1995/24**

(73) Titulaire: **HYDRO-QUEBEC**
**Montréal Québec H2Z 1A4 (CA)**

(72) Inventeurs:
- **Harvey, Paul-Etienne**
  **Québec, J3Y 8C2 (CA)**
- **Sanchez, Jean-Yves**
  **F-38330 Saint-Ismier (FR)**
- **Alloin, Fannie**
  **F-38100 Grenoble (FR)**

(74) Mandataire: **Sueur, Yvette et al**
**Cabinet SUEUR & L'HELGOUALCH,**
**109, boulevard Haussmann**
**75008 Paris (FR)**

(56) Documents cités:
**EP-A- 0 119 912**
**EP-A- 0 331 307**
**EP-A- 0 331 342**
**WO-A-93/16988**
**NL-A- 8 601 042**
**US-A- 5 146 005**

EP 0 657 484 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un copolymère d'oxyde d'éthylène et d'au moins un oxiranne substitué portant une fonction réticulable, un procédé pour sa préparation et son utilisation pour l'élaboration d'un électrolyte solide possédant de bonnes propriétés mécaniques, une bonne conductivité cationique et une bonne compatibilité chimique avec les électrodes d'un générateur fonctionnant avec des métaux alcalins tels que le lithium et le sodium.

Il est connu d'utiliser des polymères solvatants pour l'élaboration de matériaux à conduction ionique. Les polymères d'oxyde d'éthylène ou de dioxolanne sont des polymères solvatants vis à vis des cations, en particulier des cations alcalins tels que par exemple l'ion $Li^+$ présent dans les générateurs électrochimiques rechargeables du type batterie au lithium à électrolyte polymère. Cependant, ces polymères sont semi-cristallins, le taux de cristallinité évoluant en fonction de la masse molaire du polymère. Ce caractère semi-cristallin des polymères a pour conséquence de diminuer la conductivité des matériaux qui le contiennent.

On a alors trouvé que l'on pouvait diminuer la cristallinité des polymères semi-cristallins, sans affecter leurs propriétés solvatantes et leur stabilité électrochimique, en introduisant des irrégularités dans la chaîne macromoléculaire à intervalle si possible régulier. Toutefois, on a constaté que l'introduction dans un polymère semi-cristallin tel que par exemple un poly(oxyde d'éthylène) (POE) de haute masse, d'unités créant des irrégularités, c'est-à-dire le remplacement du polymère semi-cristallin par un copolymère ou un polycondensat, s'accompagnait fréquemment d'une diminution des masses moléculaires et des propriétés mécaniques, notamment à haute température. On a cherché à remédier à cet inconvénient en introduisant dans le polymère des motifs qui permettent la formation de réseaux tridimensionnels par une réticulation du copolymère, avant ou après sa mise en forme. En raison des contraintes imposées par les exigences de stabilité électrochimique, les motifs permettant la réticulation particulièrement préférés sont choisis parmi ceux qui contiennent une liaison insaturée carbone/carbone, telle qu'une liaison allyle ou une liaison vinyle. L'introduction de tels motifs dans un copolymère permet en outre de fixer divers groupements, et notamment des groupements ioniques, sur la chaîne macromoléculaire.

On connaît la préparation de copolymères d'oxyde d'éthylène et d'un oxiranne portant un substituant insaturé par une polymérisation de coordination en utilisant un amorceur à base de dérivés organo-métalliques de métaux non alcalins et non alcalino-terreux, par exemple un alkylaluminium ou un alkyl-zinc. Ce type de polymérisation est relativement insensible à la présence d'une faible quantité d'impuretés. Toutefois, la réactivité des différents comonomères dépend de leur encombrement stérique. Ainsi, lorsque l'on forme un copolymère d'oxyde d'éthylène et d'un oxiranne portant un substituant saturé (par exemple l'oxyde de propylène) ou d'un oxiranne portant un substituant insaturé (par exemple l'allyl glycidyl éther), le rendement de la polymérisation de l'oxyde d'éthylène est proche de 100%, alors que le rendement de l'oxiranne substitué dans un copolymère ayant une masse supérieure à 1000 n'est que de 60%. En outre, l'oxyde d'éthylène est consommé préférentiellement au début de la polymérisation. A cause de la différence de réactivité des monomères, le copolymère formé en début de polymérisation contient plus d'oxyde d'éthylène et il a une masse moléculaire plus élevée que celui formé au milieu ou à la fin de la réaction de polymérisation. Le copolymère formé par polymérisation de coordination a ainsi de longues séquences de poly(oxyde d'éthylène) qui sont cristallines et présente une grande hétérogénéité des masses moléculaires.

Il est connu de polymériser par voie anionique des oxirannes saturés tels que l'oxyde d'éthylène ou l'oxyde de propylène. Lorsqu'une telle polymérisation est effectuée à l'aide d'amorceurs du type hydroxyde de sodium ou hydroxyde de potassium en solution aqueuse ou dans des solvants protiques tels que l'éthylène glycol, de nombreuses réactions de transfert au solvant se produisent, et les masses molaires obtenues sont très faibles. Lorsque la polymérisation anionique d'oxirannes est effectuée en présence d'amorceurs du type alcoolate de potassium ou alcoolate de césium dans un solvant aprotique solvatant vis à vis des cations ou en présence d'agents complexants tels que les éthers-couronne, l'oxyde d'éthylène subit une polymérisation vivante, c'est-à-dire le degré de polymérisation moyen en nombre (DPn) croît avec le taux de conversion, la distribution des masses molaires est étroite, l'indice de polymolécularité I=Mp/Mn est proche de 1 et il ne se produit pratiquement pas de réactions de transfert et de terminaison. Une polymérisation anionique effectuée dans ces conditions permet d'obtenir de hautes masses lorsque le monomère est l'oxyde d'éthylène. Toutefois, sa mise en oeuvre pour des monomères du type oxiranne substitué n'a permis d'obtenir jusqu'ici que des oligomères. Par exemple, la polymérisation d'oxyde de styrène amorcée par le tert-butanolate de potassium donne un poly(oxystyrène) ayant une masse de 1000 g, et la croissance des chaînes de poly(oxypropylène) est interrompue par des réactions de transfert au monomère [D-M Simons et J.J. Verbane, J. Polym. Sc. 1960, 44, 303]. Lorsque le monomère est le phénylglycidyl éther, la croissance des chaînes est également interrompue rapidement par transfert au monomère [C.C Price, Y. Atarachi, R. Yamamoto, J. Poly. Sci. PartA1, 1969, 7, 569]. Malgré les avantages liés aux taux de conversion quasiment quantitatifs des polymérisations anioniques, l'art antérieur fait apparaître le caractère vivant de la polymérisation pour l'oxyde d'éthylène seulement.

La présente invention a pour but de fournir un copolymère d'oxyde d'éthylène et d'au moins un oxiranne substitué portant une fonction réactive réticulable par voie radicalaire, qui permet d'obtenir un matériau à conduction ionique qui présente des propriétés mécaniques améliorées par rapport aux matériaux obtenus à partir des copolymères du type poly(oxyalkylène) connus, sans que la conductivité ionique soit diminuée par un nombre trop élevé de points de réticulation qui provoquerait une augmentation de la température de transition vitreuse Tg, ledit matériau à conduction ionique présentant en outre une excellente compatibilité chimique avec les électrodes d'un générateur lorsqu'il est utilisé comme électrolyte.

La présente invention a par conséquent pour objet un copolymère dont la chaîne comprend des unités oxyde d'éthylène, des unités $-O-CH_2-CHR-$ dans lesquelles R est un substituant portant une fonction réactive réticulable par voie radicalaire, R pouvant être différent d'une unité à l'autre, et éventuellement des unités $-O-CH_2-CHR'-$ dans lesquelles R' est un substituant ne portant pas de fonction réactive réticulable par voie radicalaire, R' pouvant être différent d'une unité à l'autre, caractérisé en ce qu'il a un excellent indice de polymolécularité I=Mp/Mn et une distribution statistique des différentes unités monomères.

Parmi les copolymères de la présente invention, ceux qui ont une masse moléculaire moyenne en nombre Mn supérieure ou égale à 20 000, plus spécialement ceux qui ont une masse Mn supérieure ou égale à 100 000, sont particulièrement intéressants.

Par excellent indice de polymolécularité, on entend un indice inférieur ou égal à 2,2. Les copolymères de la présente invention ont en général un indice de polymolécularité compris entre 1,5 et 2,2.

Les différentes unités sont distribuées au hasard dans la chaîne d'un copolymère de la présente invention, mais les séquences constituées par l'enchaînement d'un même motif monomère sont plus régulières que dans les copolymères obtenus par les procédés connus, c'est-à-dire par une polymérisation de coordination. Il est dès lors relativement aisé de prévoir la longueur des séquences qui dépend uniquement de la proportion relative des monomères. La distribution statistique des unités monomères est une caractéristique importante lorsque le copolymère obtenu est soumis à un greffage en vue de fixer un groupement ionique sur la fonction réactive des substituants R de l'unité oxiranne. Une distribution statistique des groupements ioniques est essentielle pour éviter qu'il se crée des chemins privilégiés de passage des ions, lorsque le copolymère est utilisé comme matériau à conduction ionique.

Dans les unités $-O-CH_2-CHR-$ d'un copolymère de la présente invention, la fonction réactive réticulable par voie radicalaire présente dans le radical R est avantageusement une liaison carbone - carbone insaturée. Le radical R peut dans ce cas être choisi par exemple parmi les radicaux ayant la formule $CH_2=CH-(CH_2)_q-(O-CH_2)_p$ avec $1 \leq q \leq 6$ et p=0 ou 1, ou la formule $CH_3-(CH_2)_y-CH=CH-(CH_2)_x-(OCH_2)_p$, avec $0 \leq x+y \leq 5$ et p=0 ou 1. Dans une même chaîne macromoléculaire, tous les substituants insaturés R peuvent ne pas être identiques.

Dans les unités $-O-CH_2-CHR'-$ d'un copolymère de la présente invention, le substituant R' ne portant pas de fonction réactive réticulable par voie radicalaire peut être choisi parmi les radicaux alkyles, de préférence parmi les radicaux alkyles ayant de 1 à 16 atomes de carbone, plus préférentiellement parmi les radicaux alkyles ayant de 1 à 8 atomes de carbone.

Le substituant R' peut en outre être choisi parmi les radicaux alkoxy tels les radicaux $-(CH_2)_n-O-((CH_2)_m-O)_p-CH_3$, avec $0 \leq n \leq 4$, $1 \leq m \leq 4$ et $0 \leq p \leq 20$ ; de préférence n=1, m=2 et $0 \leq p \leq 8$. Le substituant R' peut également être choisi parmi les radicaux alkyl(perfluoralkyl sulfonates) éthers ; à titre d'exemple, on peut citer les radicaux ayant la formule $-CH_2-O-(CF_2)_q-CF(C_rF_{2r+1})-SO_3M$, dans laquelle M représente un cation de métal alcalin, avec $0 \leq q \leq 4$, de préférence q=0 ou 1, et $0 \leq r \leq 4$, de préférence $0 \leq r \leq 3$ ; parmi les radicaux préférés de cette catégorie, on peut citer les radicaux $-CH_2-O-CF_2-CF_2-SO_3M$, $-CH_2-O-CF_2-CF_2(CF_3)-SO_3M$ et $-CH_2-O-CF_2-SO_3M$. Le substituant R' peut aussi être choisi parmi les radicaux incorporant une fonction ionophore dans lesquels la charge négative est portée par le carbanion bis(trifluorométhylsulfonyl)méthylure $-C(SO_2CF_3)_2M''$ ; parmi ces radicaux, on peut citer $-CH_2-C(SO_2-CF_3)_2M''$ et $-(CH_2)_s-SO_2-C(SO_2-CF_3)_2M''$, avec $1 \leq s \leq 16$, de préférence $0 \leq s \leq 8$, M" représentant un cation métallique, plus particulièrement un cation monovalent tel qu'un cation de métal alcalin. Les radicaux $-CH_2-C(SO_2-CF_3)_2M''$ et $-(CH_2)_s-SO_2-C(SO_2-CF_3)_2M''$ sont particulièrement préférés.

Dans une même chaîne macromoléculaire, tous les substituants R' peuvent ne pas être identiques.

Les copolymères de la présente invention qui ont une masse moléculaire moyenne en nombre Mn élevée, c'est-à-dire au moins égale à 20 000, de préférence au moins égale à 100 000, présentent un double intérêt. D'une part, ces copolymères ont, à l'état non réticulé, des propriétés mécaniques intrinsèques supérieures aux copolymères du même type de l'art antérieur : ils peuvent être élaborés et manipulés en films minces avant réticulation ; ils peuvent en outre servir de liant élastomère ou d'adhésif lors de l'assemblage des composantes d'un générateur. Si une réticulation est nécessaire, on peut utiliser un taux de fonctions réticulables plus faible. D'autre part, une masse moléculaire élevée permet d'utiliser des quantités plus faibles d'amorceur de polymérisation et limite le nombre de fonctions terminales réactives qui sont des alcoolates ou des hydroxyles. Dans les copolymères de la présente invention ayant une masse moléculaire d'au moins 20 000, il y a par conséquent une double limitation de la concentration et de la mobilité de groupements chimiques réactifs (fonctions terminales, amorceurs de polymérisation, fonctions réticulables sensibles aux métaux alcalins, polymères de faible masse susceptibles de diffuser aux

électrodes) ce qui présente un intérêt majeur lorsqu'un copolymère selon la présente invention est utilisé comme matériau à conduction ionique, notamment dans un générateur fonctionnant avec des métaux alcalins. Dans ce cas, la conductivité ionique d'un matériau à conduction ionique comprenant le copolymère n'est pas réduite de manière sensible par la réticulation, le faible taux de réticulation ayant un effet négligeable sur la température de transition vitreuse Tg. En outre, la compatibilité électrochimique du matériau à conduction ionique, utilisé comme électrolyte, avec les électrodes d'un générateur est nettement supérieure.

Dans un mode de réalisation particulier, un copolymère selon la présente invention comporte au moins 70% en mole d'unités oxyde d'éthylène, d'environ 2 à environ 30% en moles d'unités saturées $-O-CH_2-CHR'-$, et d'environ 0,05 à environ 10% en mole d'unités $-O-CH_2-CHR-$ comportant des fonctions réticulables par voie radicalaire.

Les copolymères de la présente invention sont obtenus par un procédé de copolymérisation par voie anionique, et l'invention a également pour objet un procédé pour la préparation desdits copolymères.

Le procédé de préparation d'un copolymère selon la présente invention est caractérisé en ce qu'il consiste à faire réagir l'oxyde d'éthylène et un ou plusieurs oxirannes substitués parmi lesquels l'un au moins porte un substituant R comportant une fonction réticulable par voie radicalaire, dans un solvant aprotique en présence d'un amorceur de polymérisation anionique, les monomères et le solvant utilisés ayant une teneur en humidité et en impuretés inférieure ou égale à 100 ppm, le réacteur utilisé pour la réaction de polymérisation étant exempt de traces d'humidité et d'impuretés.

Dans la suite du texte, un oxiranne portant un substituant comportant une fonction réticulable par voie radicalaire sera désigné par "oxiranne insaturé" ; un oxiranne portant un substituant ne comportant pas fonction réticulable sera désigné par "oxiranne saturé".

L'amorceur de polymérisation est choisi parmi les métaux alcalins, utilisés sous forme métallique, sous forme d'alcoolate ou sous forme de complexe, par exemple avec un éther couronne. Le métal alcalin est choisi de préférence parmi le césium et le potassium. Les alcoolates de potassium sont particulièrement préférés.

Lorsque l'amorceur est un métal alcalin ou un alcoolate de métal alcalin, le solvant aprotique dans lequel est effectuée la polymérisation est choisi parmi les solvants polaires. A titre d'exemple de solvant polaire, on peut citer le THF, le diméthoxyéthane et le diméthylsulfoxyde. Cependant, considérant que l'oxyde d'éthylène et les monomères du type oxiranne sont polaires, on peut également utiliser un solvant non polaire, par exemple le toluène, contenant une faible quantité, par exemple 1%, d'un solvant polaire, par exemple le THF.

Lorsque l'amorceur est utilisé avec un agent complexant tel que par exemple un éther-couronne, le solvant aprotique peut être un solvant polaire ou un solvant non polaire tel que le toluène.

Le procédé de la présente invention est mis en oeuvre avec au moins un oxiranne insaturé. Parmi les oxirannes insaturés appropriés, on peut citer les oxirannes répondant à la formule

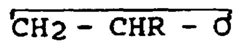

dans laquelle R a la signification donnée ci-dessus. L'allyl glycidyl éther et l'époxyhexène sont des oxirannes insaturés particulièrement préférés.

Le rôle des unités dérivées des oxirannes insaturés est de permettre, soit une réticulation du copolymère après sa formation, soit des réactions de greffage sur le substituant, par exemple en vue de fixer des groupements ioniques sur la chaîne macromoléculaire.

Le faible taux d'impuretés des monomères et du solvant utilisés pour la polymérisation peut être obtenu en traitant les monomères et le solvant sur tamis moléculaire, ou par distillation dans le cas de l'oxyde d'éthylène.

Le traitement préliminaire du réacteur en vue de le rendre exempt d'impuretés peut être effectué par exemple en lavant le réacteur à l'aide d'une solution d'amorceur, puis en éliminant la solution d'amorceur avant l'introduction des réactifs.

Lors de la mise en oeuvre du procédé de l'invention, le milieu réactionnel contient très peu d'impuretés qui entraîneraient des terminaisons de chaîne. Le rendement de la réaction est donc très élevé, pouvant atteindre des valeurs proches de 100%. Le copolymère obtenu contient ainsi une quantité de monomère résiduel suffisamment faible pour qu'il ne soit pas nécessaire de l'éliminer, ce qui présente un avantage important lorsque des monomères ayant un point d'ébullition élevé (par exemple supérieur à 150°C) sont utilisés.

Le procédé de l'invention peut également être mis en oeuvre pour copolymériser l'oxyde d'éthylène avec au moins un oxiranne insaturé et au moins un oxiranne saturé. L'introduction d'un oxiranne saturé dans le copolymère permet de réduire, voire de supprimer la cristallinité du copolymère, et de modifier ses propriétés mécaniques. Parmi les oxirannes saturés, on peut citer ceux qui correspondent à la formule

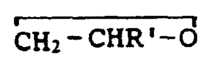

dans laquelle R' a la signification donnée ci-dessus.

Lorsqu'un copolymère de la présente invention est destiné à être utilisé pour l'élaboration d'un matériau à conduction ionique, il peut être utile de désactiver les fonctions terminales réactives des chaînes macromoléculaires, bien que celles-ci soient peu nombreuses du fait des masses moléculaires élevées.

Les fonctions terminales sont en général des

fonctions alcoolate ou OH qui sont très réactives vis à vis de l'électrode au lithium et qui contribuent à la dégradation de l'interface électrolyte polymère/électrode de lithium. Le procédé de l'invention peut donc comporter avantageusement une étape supplémentaire au cours de laquelle on désactive les fonctions terminales.

Cette désactivation peut être effectuée à l'aide de 2-bromo-1-cyano-éthane, suivant le schéma réactionnel :

$$PO^-, K^+ + BrCH_2\text{-}CH\text{-}_2CN \rightarrow PO\text{-}CH_2\text{-}CH_2\text{-}CN + KBr$$

$PO^-$, $K^+$ représentant le copolymère non désactivé.

La désactivation des fonctions terminales peut également être effectuée à l'aide d'iodure de méthyle ou de sulfate de méthyle. Les copolymères ont dans ce cas des groupes terminaux méthoxy et il se forme respectivement de l'iodure ou du sulfate de K, si la fonction terminale à désactiver est un alcoolate de potassium.

Les propriétés des copolymères de la présente invention les rendent particulièrement utiles pour l'élaboration de matériaux à conduction ionique. La masse moléculaire élevée a un effet favorable sur les propriétés mécaniques d'une part et sur les propriétés électrochimiques d'autre part, ainsi qu'il a été exposé précédemment. En outre, la distribution statistique des fonctions insaturées permet d'obtenir une réticulation homogène lorsque ces fonctions sont utilisées pour la réticulation. Si ces fonctions sont utilisées pour greffer sur le copolymère des groupements ioniques, la distribution statistique des groupements ioniques greffés permet d'éviter la création de chemins privilégiés de passage des ions.

Pour l'élaboration d'un matériau à conduction ionique, on peut utiliser des copolymères qui contiennent au moins 70% en moles d'unités oxyde d'éthylène, d'environ 2 à environ 30% en moles d'unités dérivées d'au moins un oxiranne saturé et d'environ 0,05 à environ 10% en moles d'unités dérivées d'au moins un oxiranne insaturé. Lorsque le matériau est utilisé sans solvant ou avec peu de solvant (moins de 10% en poids), la teneur en unités dérivées d'un oxiranne insaturé est de préférence comprise entre 0,05% et 1% molaire. Lorsque le matériau est utilisé à l'état gonflé par un solvant, la teneur en unités dérivées d'un oxiranne insaturé peut aller jusqu'à 10% molaire. Lorsque les unités dérivées d'un oxiranne insaturé sont destinées à être utilisées pour le greffage de groupement ionique sur le copolymère, leur teneur est de préférence comprise entre 3 et 5% molaire.

Suivant un mode de réalisation, un matériau à conduction ionique de la présente invention comprend essentiellement un composé ionique facilement dissociable en solution dans un copolymère selon la présente invention. Le composé ionique introduit dans le copolymère avant réticulation ou dans le polymère réticulé est choisi parmi les composés ioniques utilisés habituellement pour les matériaux du type polymère solide à conduction ionique. A titre d'exemple, on peut citer les composés ioniques $(1/aA)^+Y^-$, dans lesquels $A^{a+}$ représente un proton, un cation métallique, un cation organique du type ammonium, amidinium ou guanidinium, a étant la valence du cation $A^{a+}$ ; $Y^-$ représente un anion à charge électronique délocalisée, par exemple $Br^-$, $ClO_4^-$, $AsF_6^-$, $R_FSO_3^-$, $(R_FSO_2)_2N^-$, $(R_FSO_2)_3C^-$, $C_6H_{(6-x)}(CO(CF_3SO_2)_2C^-)_x$ ou $C_6H_{(6-x)}(SO_2(CF_3SO_2)_2C^-)_x$, $R_F$ représentant un groupement perfluoroalkyle ou perfluoroaryle, avec $1 \leq x \leq 4$. Les composés ioniques préférés sont les sels de lithium, et plus particulièrement $(CF_3SO_2)_2N^-Li^+$, $CF_3SO_3^-Li^+$, les composés $C_6H_{(6-x)}\text{-}[CO(CF_3SO_2)_2C^-Li^+]_x$ dans lesquels x est compris entre 1 et 4, de préférence avec x = 1 ou 2, les composés $C_6H_{(6-x)}\text{-}[SO_2(CF_3SO_2)_2C^-Li^+]_x$ dans lesquels x est compris entre 1 et 4, de préférence avec x = 1 ou 2. Des mélanges de ces sels entre eux ou avec d'autres sels peuvent être utilisés. A titre d'exemple de mélanges de sels on peut citer : $(CF_3SO_2)_2N^-Li^+$ et $CF_3SO_3^-Li^+$ ou $(CF_3SO_2)_2N^-Li^+$ et $C_6H_4\text{-}[CO(CF_3SO_2)_2C^-Li^+]_2$ dans des proportions variées, mais comprenant de préférence de 20 à 40% en poids de $(CF_3SO_2)_2N^- Li^+$. Le composé ionique peut être incorporé au copolymère en immergeant le copolymère, éventuellement sous forme d'un film, dans une solution du composé ionique choisi dans un solvant, le solvant étant ensuite évaporé. Dans une variante, le composé ionique peut être incorporé au copolymère en préparant un film à partir d'une solution comprenant à la fois le copolymère et le composé ionique.

Suivant un autre mode de mise en oeuvre, un matériau à conduction ionique de la présente invention est constitué essentiellement par un copolymère selon la présente invention dans lequel un composé ionique comportant une insaturation a été greffé sur les radicaux R par coréticulation avec les unités $-CH_2\text{-}CHR\text{-}O\text{-}$. Dans ce cas, il est préférable d'utiliser un copolymère selon la présente invention comprenant d'environ 3% à environ 5% molaire d'unités $-CH_2\text{-}CHR\text{-}O\text{-}$. Parmi les composés ioniques appropriés qui peuvent être greffés sur les radicaux R, on peut citer les dérivés de sultones perhalogénées portant un groupement ionique décrits dans WO93/16988, par exemple les composés du type $CH_2=CH\text{-}CH_2\text{-}(CF_2)_2\text{-}SO_3M'$, $CH_2=CH\text{-}CH_2\text{-}O\text{-}CF(C_yF_{2y+1})\text{-}CF_2SO_3M'$ et $CH_2=CH\text{-}CF(C_yF_{2y+1})\text{-}CF_2SO_3M'$, avec $0 \leq y \leq 4$, de préférence $1 \leq y \leq 3$, M' représentant un proton, un cation métallique, plus particulièrement un cation de métal monovalent, un cation organique. Parmi les cations métalliques, les cations de métal alcalin sont particulièrement préférés. Parmi les cations organiques, on peut citer les cations ammonium, les cations guanidinium et les cations amidinium, lesdits cations organiques étant éventuellement quaternarisés. On peut également citer les sels de bis(trifluorométhylsulfonyl) méthylure tels que $[CH_2=C(CH_3)\text{-}CO\text{-}C(SO_2\text{-}CF_3)_2]^-Li^+$, $[CH_2=C(CH_3)\text{-}C(SO_2\text{-}CF_3)_2]^-Li^+$, $[CH_2=CH\text{-}CH_2\text{-}CO\text{-}C(SO_2\text{-}CF_3)_2]^-Li^+$, $[CH_2=CH\text{-}\Phi\text{-}SO_2\text{-}C(SO_2\text{-}CF_3)_2]^-Li^+$, $[CH_2=CH\text{-}CH_2\text{-}SO_2\text{-}C(SO_2\text{-}CF_3)_2]^-Li^+$,

$[CH_2=CH-SO_2-C(SO_2-CF_3)_2]^-Li^+$, $[CH_2=CH-\Phi-CO-C(SO_2-CF_3)_2]^-Li^+$.

Selon encore un autre mode de réalisation, un matériau à conduction ionique peut être constitué essentiellement par un copolymère selon la présente invention comportant des unités $-CH_2-CHR'-O-$ dans lesquelles le radical R' comporte des groupements ioniques. Les groupements ioniques peuvent être choisis parmi les groupes bis(trifluorométhylsulfonyl)méthylure $-C(SO_2CF_3)_2M''$ dans lesquels M" est un cation métallique, de préférence alcalin, ou des groupes perfluorosulfonyles du type $-CH_2-O-(CF_2)_q-CF(C_rF_{2r+1})-SO_3M$, M représentant un métal monovalent. Les unités $-CH_2-CHR'-O-$ remplissent alors deux fonctions. D'une part, elles diminuent la régularité de la chaîne macromoléculaire solvatante, et par conséquent la cristallinité ; d'autre part, elles confèrent au copolymère un caractère conducteur ionique unipolaire cationique.

Les différents moyens décrits ci-dessus pour introduire des espèces ioniques dans un copolymère selon l'invention pour l'élaboration d'un matériau à conduction ionique peuvent bien entendu être combinés si on le souhaite.

Divers additifs peuvent être ajoutés au matériau de la présente invention, pour modifier les propriétés du matériau final. Ainsi, on peut incorporer un agent plastifiant tel que le carbonate d'éthylène, le carbonate de propylène, la $\gamma$-butyrolactone, le diméthylformamide, la N-méthylpyrrolidone, les tétraalkylsulfamides, les éthers méthyliques des polyéthylène glycols de masse comprise entre 200 et 2000 et, d'une manière générale, les dérivés de molécules polaires de faible volatilité. La proportion de ces additifs peut aller de 1 à 90% de la masse totale.

Les matériaux à conduction ionique de la présente invention, constitués par un copolymère et un composé ionique, ou par un copolymère portant des substituants ioniques, sont utilisables comme électrolyte solide polymère séparant des électrodes et/ou comme un constituant d'électrode composite, tout particulièrement lorsque le copolymère a une masse moléculaire au moins égale à 20 000. L'invention a par conséquent également pour objet une cellule électrochimique dans laquelle l'électrolyte comprend un matériau à conduction ionique selon la présente invention et/ou dans laquelle l'une au moins des électrodes est une électrode composite comprenant un tel matériau. Dans un mode de réalisation particulier, l'électrolyte est une membrane séparant les électrodes, la membrane étant constituée par un matériau à conduction ionique selon la présente invention, plastifié par addition d'un solvant approprié, par exemple par un mélange carbonate d'éthylène / carbonate de propylène (rapport en poids d'environ 1/1).

Les copolymères et les matériaux à conduction ionique de la présente invention sont utiles pour un générateur électrochimique à métal alcalin rechargeable ou non. Un tel générateur comprend une électrode négative et une électrode positive séparées par un électrolyte solide polymère, l'électrolyte solide polymère comprenant un copolymère selon la présente invention. Dans un tel générateur, les électrodes peuvent également contenir un matériau à conduction ionique de la présente invention agissant en tant que liant conducteur, lorsqu'elles sont réalisées sous forme composite. Dans cette application particulière, les copolymères de la présente invention sont particulièrement intéressants du fait qu'ils contiennent peu d'espèces susceptibles d'interférer avec les réactions électrochimiques. En effet, les masses molaires moyennes élevées obtenues diminuent substantiellement le nombre d'extrémités réactives, et le rendement élevé de la polymérisation limite la teneur en catalyseur résiduel. En outre, les masses molaires moyennes élevées que les copolymères peuvent avoir confèrent aux copolymères et aux matériaux à conduction ionique qui les contiennent une tenue mécanique intrinsèque suffisante en l'absence de réticulation. Néanmoins, si une réticulation est nécessaire, la répartition statistique des unités réticulables permet d'obtenir une réticulation très homogène.

Les copolymères et les matériaux à conduction ionique sont également utiles dans d'autres systèmes électrochimiques tels que les systèmes électrochromes, les systèmes de modulation de lumière, pour l'élaboration de membranes sélectives ou de membranes de référence dans les capteurs à membrane.

La présente invention est illustrée par les exemples ci-dessous, étant entendu que l'invention ne doit pas être limitée aux exemples donnés.

Dans les exemples suivants, la polymérisation a été réalisée dans des réacteurs en acier inoxydable Parr® ayant une capacité de 2 1, munis d'un agitateur et d'une vanne de pied permettant de vider le réacteur par le bas. Toutes les opérations de transfert ont été réalisées sous atmosphère inerte en utilisant de l'argon ou de l'azote très secs et sans oxygène.

Dans chaque exemple, le réacteur a été séché en le lavant par une solution d'amorceur et en éliminant cette solution d'amorceur avant d'introduire les réactifs dans le réacteur.

L'oxyde d'éthylène a été distillé, les solvants et les autres monomères utilisés ont été séchés sur tamis moléculaire avant leur introduction dans le réacteur, en vue d'abaisser leur teneur en eau à moins de 100 ppm, valeur vérifiée par la méthode de Karl-Fischer.

## EXEMPLE 1

Dans un réacteur exempt de traces d'eau et d'impuretés et contenant 250 ml de toluène, $10^{-3}$ mole de tert-butanolate de potassium et 3 ml de THF, on a introduit un mélange de 83,9 g d'oxyde d'éthylène, 10 g de méthyl glycidyl éther et 5,1 g d'allyl glycidyl éther. La température du réacteur a été portée à 120°C et maintenue à cette température pendant 22,5 heures. On a observé une baisse de pression de $10{,}3 \times 10^5$ Pa à $10^5$ Pa. On a ensuite abaissé la température à 70°C et on

a ajouté 100 mg de sulfure de 3-tert-butyl-4-hydroxy-5-méthyl-phényle commercialisé par la société Aldrich, ce produit servant d'agent stabilisant et anti-oxydant pour le polymère. On a ensuite lavé le réacteur avec un peu de toluène et on a récupéré 99 g de copolymère après évaporation du solvant, ce qui correspond à un rendement de 100%. L'analyse DSC montre un pic de fusion Tf à 30°C et une température de transition vitreuse Tg = -64°C. La masse moléculaire moyenne en nombre, déterminée par chromatographie d'exclusion stérique (SEC), est d'environ 105 000, avec un indice de polymolécularite de 1,7.

## EXEMPLE 2

Dans un réacteur exempt de traces d'eau et d'impuretés et contenant 115 ml de toluène, $2.10^{-3}$ mole de tert-butanolate de potassium et 6 ml de THF, on a introduit à température ambiante un mélange de 87,2 g d'oxyde d'éthylène, 9,8 g de méthyl glycidyl éther et 5 g d'allyl glycidyl éther. La température du réacteur a été portée à 120°C et maintenue à cette température pendant 22 heures. On a observé une baisse de pression de $10{,}3x10^{-5}$ à $1{,}4x10^{-5}$ Pa. On a ensuite ajouté 100 mg de sulfure de 3-tert-butyl-4-hydroxy-5-méthyl-phényle en solution dans 50 ml de toluène. On a récupéré le copolymère après évaporation du solvant avec un rendement de 85%, l'essentiel des pertes étant dû au fait qu'une faible quantité de copolymère est resté collée sur la paroi du réacteur. L'analyse DSC montre un pic de fusion Tf à 30°C et une température de transition vitreuse Tg = -61°C. La masse moléculaire moyenne en nombre, déterminée par chromatographie d'exclusion stérique (SEC), est d'environ 80 000, avec un indice de polymolécularité de 1,9.

## EXEMPLE 3

Dans un réacteur exempt de traces d'eau et d'impuretés, on a introduit 250 ml de toluène, $10^{-3}$ mole de t-butanolate de potassium et 3 ml de THF. La température du réacteur a été portée à 110°C et on a ensuite introduit à l'aide d'une burette sous pression un mélange de 90,2 g d'oxyde d'éthylène, 8,4 g de méthyl glycidyl éther et 1,9 g d'allyl glycidyl éther. La température du réacteur a été portée à 120°C et maintenue à cette température pendant 22 heures pendant lesquelles on a observé une baisse de pression de $7{,}7x10^{-5}$ à $2{,}6x10^{-5}$ Pa. On a ensuite transvasé le contenu du réacteur dans un flacon en verre contenant 100 mg de sulfure de 3-tert-butyl-4-hydroxy-5-méthyl-phényle sous atmosphère d'argon. On a récupéré 94,4 g de copolymère après évaporation du solvant, ce qui correspond à un rendement de 94%, compte non tenu du copolymère non extrait du réacteur. L'analyse DSC montre un pic de fusion Tf à 33°C et une température de transition vitreuse Tg = -59°C. La masse moléculaire moyenne en nombre, déterminée par chromatographie d'exclusion stérique (SEC), est d'environ 110 000, avec un indice de polymolécularité de 2,2.

## EXEMPLE 4

On a utilisé un matériau préparé conformément à l'exemple 3 pour réaliser une pile au lithium fonctionnant à 60°C avec une cathode composite de $TiS_2$. L'électrolyte polymère a été réalisé en dissolvant le copolymère, 2% en poids de peroxyde de benzoyle et le sel bis(trifluorosulfonyl)imidure de lithium (TFSI) dans l'acétonitrile dans un rapport O/Li de 30/1. La solution a ensuite été épandue sous forme d'un film ayant une épaisseur de 25 µm et le film a été séché sous vide à 90°C. De même, l'électrode composite a été élaborée sur nickel par voie solvant en utilisant du noir de Shawinigan à un taux voisin de 5% en poids, du copolymère et du $TiS_2$, de façon à obtenir une électrode composite dont la capacité est de 3 Cb par $cm^2$. La pile a été assemblée avec une anode de lithium de 22 µm par pressages successifs des films sous vide à 85°C, puis elle a été mise à cycler à 60°C. On a observé que l'utilisation se maintenait à plus de 85% sur plus de 150 cycles effectués à un taux de décharge de 6 heures (C/6) et à un taux de charge (C/12) sans aucune perte d'utilisation. Cet essai confirme la stabilité électrochimique des copolymères de la présente invention qui ont une masse élevée.

## EXEMPLE 5

On a introduit dans un réacteur 100 ml de THF, 0,1 g de t-butanolate de potassium, 80 g d'oxyde d'éthylène (OE) et 9 g d'allyl glycidyl éther (AGE), ce qui correspond à un rapport OE/AGE de 22. La température du réacteur a été portée à 120°C et maintenue à cette température pendant 6 heures pendant lesquelles on a observé une baisse de pression de $7.10^5$ Pa à $1{,}3.10^5$ Pa. A la fin de la réaction, le milieu réactionnel a été désactivé par introduction de méthanol dans le réacteur et on a ajouté du sulfure de 3-tert-butyl-4-hydroxy-5-méthylphényle. On a récupéré 87 g de copolymère, désigné ci-après par Anio22, correspondant à un rendement quasi quantitatif. Les caractéristiques du copolymère sont les suivantes : Mp = 120 000 g/md; indice de polymolécularité I=Mp/Mn = 1,9 ; Tg = -62°C ; Tf = 35,6°C ; taux de cristallinité X = 0,37.

Le nombre d'unités OE entre deux unités AGE dans le copolymère $Anio_{22}$ a été évalué de la manière suivante, en faisant l'hypothèse d'une répartition régulière des unités AGE dans la chaîne du copolymère, à savoir 22 unités OE entre 2 unités AGE. On a supposé que la température de fusion d'un copolymère OE/AGE dans lequel n unités OE se trouvent entre 2 unités AGE est sensiblement identique à la température de fusion d'un polyéthylèneglycol (PEG) dont la masse moyenne Mp est sensiblement identique à celle d'une séquence $-(OE)_n-$, c'est-à-dire Mp = n x 44. On a alors déterminé

la température de fusion de plusieurs PEG ayant des masses molaires en poids différentes et on a tracé la courbe Tf en fonction de Mp. La figure 1 représente la variation de la température de fusion Tf, exprimée en °C, en fonction de la masse moléculaire moyenne en poids, exprimée en grammes, pour un PEG (triangles noirs). On a observé que la température de fusion des PEG augmente très rapidement avec la longueur de la chaîne pour atteindre 65°C pour des masses voisines de 8 000 g. En outre, d'après cette courbe, le PEG dont la température de fusion est voisine de 35°C a une masse molaire moyenne d'environ 1 000 g, ce qui correspond à environ 22 unités OE.

Trois évaluations similaires ont été effectuées à partir de copolymères obtenus en utilisant des quantités de monomères telles que les rapports molaires OE/AGE soient respectivement de 23, 34 et 45 (copolymères désignés respectivement par $Anio_{23}$, $Anio_{34}$ et $Anio_{45}$). La température de fusion de chacun des copolymères a été déterminée et reportée sur la courbe de la fig.1 (carrés blancs). Il s'est confirmé que la température de fusion d'un copolymère $Anio_n$ est sensiblement identique à celle du PEG ayant une masse molaire sensiblement égale à n x 44. Ces essais confirment ainsi la répartition régulière des unités monomères dans les copolymères OE/AGE obtenus par le procédé de polymérisation selon la présente invention.

## EXEMPLE 6

Le copolymère $Anio_{22}$ de l'exemple 4 a été réticulé à 70°C en présence de 2% en masse de peroxyde de benzoyle par rapport au copolymère. Le réseau réticulé obtenu présente une température de fusion Tf = 28°C, et un taux de cristallinité X = 0,20.

Plusieurs électrolytes ont été préparés sous forme de film à partir du copolymère $Anio_{22}$. On a préparé des solutions dans l'acétonitrile de copolymère $Anio_{22}$, de trifluorosulfonylimidure de lithium (TFSI) et de peroxyde de benzoyle, la teneur en TFSI variant d'une solution à l'autre, et on a coulé chacune des solutions sur un support. Après évaporation du solvant, chaque film de copolymère obtenu a été réticulé par chauffage, maintenu sous vide pendant plusieurs jours, puis conservé en boîte à gants. La conductivité a été déterminée à différentes températures entre 20°C et 84°C.

La figure 2 représente la variation de la conductivité $\sigma$, exprimée en $\Omega^{-1}cm^{-1}$, en fonction de la température, exprimée en °C, pour différents électrolytes. Les cercles clairs correspondent à un électrolyte constitué par le copolymère $Anio_{22}$ et le sel TFSI dans lequel le rapport O/Li = 14 ; les cercles noirs correspondent à un électrolyte constitué par le copolymère $Anio_{22}$ et le sel TFSI dans lequel le rapport O/Li = 16,7 ; les triangles clairs correspondent à un électrolyte constitué par un poly(oxyde d'éthylène) dont la masse molaire est de $5.10^6$ g/mole et dont la teneur en sel TFSI est telle que O/Li = 8, considéré habituellement comme polymère de référence ayant la meilleure conductivité ionique.

Les conductivités obtenues pour les électrolytes de l'invention sont supérieures, dans tout l'intervalle de température exploré, à celles relevées pour le complexe poly(oxyde d'éthylène) de référence.

L'analyse par DSC a mis en évidence le caractère totalement amorphe des électrolytes.

Le tableau ci-dessous donne les températures de transition vitreuse Tg (°C) pour différentes concentrations en sel, indiquées par le rapport atomique O/Li, et fait apparaître que la température de transition vitreuse d'un électrolyte préparé à partir d'un copolymère selon l'invention augmente faiblement avec la concentration en sel.

| O/Li | Tg (°C) |
|---|---|
| 8 | -33,6 |
| 9 | -34,6 |
| 13 | -38,6 |
| 16,7 | -46 |
| 22 | -49,2 |
| 27,5 | -51,2 |

Le domaine de stabilité électrochimique des électrolytes réseau $Anio_{22}$/LiTFSI a été établi par voltamétrie cyclique sur microélectrode de platine à 81°C. Les voltampérogrammes obtenus montrent le dépôt de lithium, sous forme d'un pic fin vers 0 V vs $Li/Li^+$. Le balayage retour montre la réoxydation des alliages et composés intermétalliques, formés entre le platine et le lithium. Aucun pic attribuable à l'oxydation ou à la réduction du copolymère n'a été observé dans la gamme de tension explorée, à savoir de 0 à +3,9 V vs $Li/Li^+$.

L'analyse thermogravimétrique fait apparaître que les électrolytes sont stables jusqu'à 240°C, ce qui est largement suffisant lorsqu'ils sont utilisés dans des batteries tout solide au lithium, du fait que la fusion du lithium intervient dès 180°C.

## EXEMPLE 7

On a introduit dans un réacteur 150 ml de THF, 0,12 g de t-butanolate de potassium, 89 g d'oxyde d'éthylène (OE), 9,8 g d'époxyhexène et 8,4 g d'un époxyde

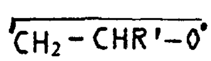

dans lequel R' représente un groupe $CH_2$-O-$CF_2$-$CF_2$-$SO_3K$. La température du réacteur a été portée à 110°C et maintenue à cette température pendant 12 heures. Ensuite, on a désactivé le milieu réactionnel en introduisant du méthanol dans le réacteur et

on a précipité dans l'hexane, ce qui a permis d'obtenir 103 g d'un polymère portant des fonctions ionophores. Le rendement est voisin de 96%.

L'analyse par chromatographie d'exclusion stérique (CES), sur deux colonnes de CES de 10 nm, d'une solution obtenue en dissolvant le précipité dans le THF n'a pas permis de détecter de résidus du monomère ionique

$$\overline{CH_2-CHR'-O}$$

qui n'aurait pas réagi.

Une membrane réticulée a été réalisée en ajoutant 1% en poids (par rapport au polymère) de peroxyde de benzoyle à une solution du copolymère dans un solvant et en chauffant à 80°C pendant deux heures. La conductivité de la membrane obtenue est de $10^{-5}$ S.cm$^{-1}$ à 37°C et de $10^{-4}$ S.cm$^{-1}$ à 77°C.

L'analyse par DSC montre un point de fusion à 24°C et une température de transition vitreuse de -55°C.

Un échantillon de la membrane réticulée a été gonflé à trois reprises par une solution de $(CF_3SO_2)_2NLi$ dans l'acétonitrile, en vue d'échanger les cations $K^+$ par des cations $Li^+$. La membrane a ensuite été placée sur un creuset filtrant et on a éliminé la solution d'acétonitrile par filtration. Ensuite, on a lavé la membrane à trois reprises dans 50 ml d'acétonitrile pour éliminer toute trace de sel libre et on l'a séchée soigneusement. Sa conductivité était alors de $10^{-5}$ S.cm$^{-1}$ à 45°C et de $10^{-4}$ S.cm$^{-1}$ à 95°C. Sa température de fusion était de 25°C et sa température de transition vitreuse de -57°C.

## EXEMPLE 8

On a préparé un électrolyte unipolaire à conduction anionique en coréticulant le copolymère $Anio_{22}$ préparé dans l'exemple 4 avec un composé ionophore portant une double liaison allylique, $CH_2=CH-CH_2-O-CF_2-CF_2-SO_3Li$. La réticulation a été effectuée en présence de 2% en poids de peroxyde de benzoyle à 70°C pendant 3 heures. La quantité de composé ionophore ajoutée correspond à un rapport O/Li de 15. L'analyse des solvants après lavage de la membrane réticulée montre qu'environ 90% du sel a été incorporé dans le réseau. Dans le réseau, le rapport O/Li est donc de 17.

L'analyse DSC montre un pic de fusion à 19°C et une température de transition vitreuse de -58°C.

L'électrolyte atteint une conductivité de $10^{-5}$ S.cm$^{-1}$ à 33°C et $10^{-4}$ S.cm$^{-1}$ à 70°C.

La membrane a ensuite été gonflée en incorporant 30% en poids d'un mélange en proportion molaire 2/1 de carbonate de propylène et carbonate d'éthylène. La conductivité a alors atteint $5.10^{-4}$ S.cm$^{-1}$ à 20°C et $10^{-3}$ S.cm$^{-1}$ à 60°C.

**Revendications**

1. Procédé pour la préparation d'un copolymère dont la chaîne comprend des unités oxyde d'éthylène, des unités · $-O-CH_2-CHR-$ dans lesquelles R est un substituant comportant une fonction réactive réticulable par voie radicalaire, R pouvant être différent d'une unité à l'autre, et éventuellement des unités $-O-CH_2-CHR'-$ dans lesquelles R' est un substituant ne comportant pas de fonction réactive réticulable par voie radicalaire, R' pouvant être différent d'une unité à l'autre, ledit copolymère ayant un indice de polymolécularité I=Mp/Mn inférieur ou égal à 2,2, une masse moléculaire moyenne en nombre Mn supérieure ou égale à 20 000 et une distribution statistique des différentes unités monomères, **caractérisé en ce qu'**il consiste à faire réagir de l'oxyde d'éthylène et un ou plusieurs oxirannes substitués parmi lesquels l'un au moins porte un substituant R comportant une fonction réticulable par voie radicalaire dans un solvant aprotique en présence d'un amorceur de polymérisation anionique, l'oxyde d'éthylène étant au préalable distillé et le(s) oxirane (s) et le solvant étant au préalable séchés sur tamis moléculaire de manière à **manière à abaisser leur** teneur en humidité et en impuretés **à une valeur** inférieure ou égale à 100 ppm, le réacteur utilisé pour la réaction de polymérisation étant exempt de traces d'humidité et d'impuretés.

2. Procédé selon la revendication 1, **caractérisé en ce que** l'amorceur de polymérisation est choisi parmi les métaux alcalins, utilisés sous forme métallique, sous forme d'alcoolate ou sous forme de complexe.

3. Procédé selon la revendication 2, **caractérisé en ce que** le métal alcalin est choisi parmi le césium et le potassium.

4. Procédé selon la revendication 1, **caractérisé en ce que** l'oxiranne portant une fonction réticulable par voie radicalaire est choisi parmi les oxirannes répondant à la formule $\overline{CH_2-CHR-O}$ dans laquelle R représente un radical comprenant un liaison carbone - carbone insaturée, plus particulièrement un radical ayant la formule $CH_2=CH-(CH_2)_q-(O-CH_2)_p$ avec $1 \leq q \leq 6$ et p = 0 ou 1, ou la formule $CH_3-(CH_2)_y-CH=CH-(CH_2)_x-(OCH_2)_p$, avec $0 \leq x+y \leq 5$ et p = 0 ou 1.

5. Procédé selon la revendication 4, **caractérisé en ce que** l'oxiranne $\overline{CH_2-CHR-O}$ est l'allyl glycidyl éther ou l'époxyhexène.

6. Procédé selon la revendication 1, **caractérisé en ce que** la copolymérisation de l'oxyde d'éthylène avec au moins un oxiranne portant une fonction réticulable par voie radicalaire est effectuée en présence d'au moins un oxiranne $\overline{CH_2\text{-}CHR'\text{-}O}$ dans lequel R' est un substituant ne comprenant pas de fonction réactive réticulable par voie radicalaire.

7. Procédé selon la revendication 6, **caractérisé en ce que** R' est choisi parmi les radicaux alkyles, de préférence parmi les radicaux alkyles ayant de 1 à 16 atomes de carbone ; parmi les radicaux alkoxy tels les radicaux $-(CH_2)_n-O-((CH_2)_m-O)_p-CH_3$, avec $0 \leq n \leq 4$, $1 \leq m \leq 4$ et $0 \leq p \leq 20$ ; parmi les radicaux alkyl(perfluoralkyl sulfonates) éthers ; parmi les radicaux incorporant une fonction ionophore dans lesquels la charge négative est portée par le carbanion bis(trifluorométhylsulfonyl)méthylure $-C(SO_2CF_3)_2M''$, M'' représentant un cation métallique, plus particulièrement un cation monovalent tel qu'un cation de métal alcalin.

8. Procédé selon la revendication 1, **caractérisé en ce qu'**il comporte une étape supplémentaire au cours de laquelle on désactive les fonctions terminales du copolymère.

9. Copolymère dont la chaîne comprend des unités oxyde d'éthylène, des unités $-O-CH_2-CHR-$ dans lesquelles R est un substituant comportant une fonction réactive réticulable par voie radicalaire, R pouvant être différent d'une unité à l'autre, et éventuellement des unités $-O-CH_2-CHR'-$ dans lesquelles R' est un substituant ne comportant pas de fonction réactive réticulable par voie radicalaire, R' pouvant être différent d'une unité à l'autre, ledit copolymère ayant un indice de polymolécularité I=Mp/Mn inférieur ou égal à 2,2, une masse moléculaire moyenne en nombre Mn supérieure ou égale à 20 000, et une distribution statistique des différentes unités monomères.

10. Copolymère selon la revendication 9, **caractérisé en ce qu'**il a **une masse moléculaire moyenne en nombre** supérieure ou égale à 100 000.

11. Copolymère selon la revendication 9, **caractérisé en ce que** le substituant R est un radical ayant la formule $CH_2=CH-(CH_2)_q-(O-CH_2)_p$ avec $1 \leq q \leq 6$ et p=0 ou 1, ou la formule $CH_3-(CH_2)_y-CH=CH-(CH_2)_x-(OCH_2)_p$, avec $0 \leq x+y \leq 5$ et p=0 ou 1.

12. Copolymère selon la revendication 9, **caractérisé en ce que** le substituant R' est choisi parmi les radicaux alkyles, de préférence parmi les radicaux alkyles ayant de 1 à 16 atomes de carbone ; parmi les radicaux alkoxy tels les radicaux $-(CH_2)_n-O-((CH_2)_m-O)_p-CH_3$, avec $0 \leq n \leq 4$, $1 \leq m \leq 4$ et $0 \leq p \leq 20$ ; parmi les radicaux alkyl(perfluoralkyl sulfonates) éthers ; parmi les radicaux incorporant une fonction ionophore dans lesquels la charge négative est portée par le carbanion bis(trifluorométhylsulfonyl)méthylure $-C(SO_2CF_3)_2M''$, M'' représentant un cation métallique, plus particulièrement un cation monovalent tel qu'un cation de métal alcalin.

13. Copolymère selon la revendication 9, **caractérisé en ce qu'**il comporte au moins 70% en mole d'unités oxyde d'éthylène, d'environ 2 à environ 30% en moles d'unités $-O-CH_2-CHR'-$, et d'environ 0,05 à environ 10% en mole d'unités $-O-CH_2-CHR-$.

14. Matériau à conduction ionique comprenant comme solvant polymère un copolymère qui comprend des unités oxyde d'éthylène, des unités $-O-CH_2-CHR-$ dans lesquelles R est un substituant comportant une fonction réticulable par voie radicalaire, R pouvant varier d'une unité à l'autre, et éventuellement des unités $-O-CH_2-CHR'-$ dans lesquelles R' est un substituant ne comportant pas de fonction réticulable par voie radicalaire, R' pouvant varier d'une unité à l'autre, et qui a un indice de polymolécularité I=Mp/Mn inférieur ou égal à 2,2, une distribution statistique des différentes unités monomères, et une masse moléculaire moyenne en nombre au moins égale à 20 000.

15. Matériau à conduction ionique selon la revendication 14, **caractérisé en ce qu'**il contient en outre un sel facilement dissociable.

16. Matériau à conduction ionique selon la revendication 14, **caractérisé en ce que** le copolymère a été transformé par greffage de groupements ioniques sur les fonctions réactives du substituant R des unités $-O-CH_2-CHR-$.

17. Matériau à conduction ionique selon la revendication 14, **caractérisé en ce que** le copolymère comprend des unités $-O-CH_2-CHR'-$ dans lesquelles le radical R' comprend un groupement ionique.

18. Matériau à conduction ionique selon la revendication 14, **caractérisé en ce qu'**il est gonflé par un solvant.

19. Cellule électrochimique dans laquelle :

- l'électrolyte comporte un matériau à conduction ionique comprenant comme solvant polymère un copolymère qui comprend des unités oxyde d'éthylène, des unités $-O-CH_2-CHR-$ dans lesquelles R est un substituant comportant une fonction réticulable par voie radicalaire, R pouvant varier d'une unité à l'autre, et éventuellement des unités $-O-CH_2-CHR'-$ dans lesquelles R' est un substituant ne comportant pas de fonction réticulable par voie radicalaire, R' pouvant varier d'une unité à l'autre, et qui a un indice de polymolécularité I = Mp/Mn inférieur ou égal à 2,2, une distribution statistique des différentes unités monomères, et une masse moléculaire moyenne en nombre au moins égale à 20 000 ;

- et/ou l'une au moins des électrodes est une électrode composite comprenant un tel matériau à conduction ionique.

**20.** Générateur électrochimique rechargeable ou non, comprenant une électrode négative et une électrode positive séparées par un électrolyte solide polymère, dans lequel :

- l'électrolyte comporte un matériau à conduction ionique comprenant comme solvant polymère un copolymère qui comprend des unités oxyde d'éthylène, des unités $-O-CH_2-CHR-$ dans lesquelles R est un substituant comportant une fonction réticulable par voie radicalaire, R pouvant varier d'une unité à l'autre, et éventuellement des unités $-O-CH_2-CHR'-$ dans lesquelles R' est un substituant ne comportant pas de fonction réticulable par voie radicalaire, R' pouvant varier d'une unité à l'autre, et qui a un indice de polymolécularité I = Mp/Mn inférieur ou égal à 2,2, une distribution statistique des différentes unités monomères, et une masse moléculaire moyenne en nombre au moins égale à 20 000 ;
- et/ou l'une au moins des électrodes est une électrode composite comprenant un tel matériau à conduction ionique.

**21.** Utilisation d'un matériau à conduction ionique comprenant comme solvant polymère un copolymère qui comprend des unités oxyde d'éthylène, des unités $-O-CH_2-CHR-$ dans lesquelles R est un substituant comportant une fonction réticulable par voie radicalaire, R pouvant varier d'une unité à l'autre, et éventuellement des unités $-O-CH_2-CHR'-$ dans lesquelles R' est un substituant ne comportant pas de fonction réticulable par voie radicalaire, R' pouvant varier d'une unité à l'autre, et qui a un indice de polymolécularité I = Mp/Mn inférieur ou égal à 2,2, une distribution statistique des différentes unités monomères, et une masse moléculaire moyenne en nombre au moins égale à 20 000, pour l'élaboration de systèmes électrochromes, de systèmes de modulation de lumière, de membranes sélectives ou de membranes de référence dans les capteurs à membrane.

## Patentansprüche

**1.** Verfahren zur Herstellung eines Copolymers, dessen Kette Ethylenoxideinheiten, Einheiten $-O-CH_2-CHR-$, in denen R ein Substituent ist, der eine radikalisch vernetzbare reaktive Funktionalität umfasst, wobei sich die R von einer Einheit zur anderen unterscheiden können, und gegebenenfalls Einheiten $-O-CH_2-CHR'-$ umfasst, in denen R' ein Substituent ist, der keine radikalisch vernetzbare reaktive Funktionalität umfasst, wobei sich die R' von einer Einheit zur anderen unterscheiden können, wobei das Copolymer einen Polymolekularitätsindex $I = Mw/Mn \leq 2{,}2$, ein zahlenmittleres Molekulargewicht $Mn \geq 20.000$ und eine statistische Verteilung der verschiedenen Monomereinheiten aufweist, **dadurch gekennzeichnet, dass** es im Umsetzen von Ethylenoxid mit einem oder mehreren substituierten Oxiranen, von denen zumindest eines einen Substituenten R trägt, der eine radikalisch vernetzbare Funktionalität umfasst, in einem aprotischen Lösungsmittel in Gegenwart eines anionischen Polymerisationsinitiators umfasst, wobei das Ethylenoxid im Voraus destilliert wird und das bzw. die Oxirane und das Lösungsmittel im Voraus über Molekularsieb getrocknet werden, um ihren Gehalt an Feuchtigkeit und an Verunreinigungen auf einen Wert ≤ 100 ppm zu senken, wobei der für die Reaktion eingesetzte Polymerisationsreaktor frei von Feuchtigkeits- und Verunreinigungsspuren ist.

**2.** Verfahren nach Anspruch 1, **dadurch gekennzeichnet, dass** der Polymerisationsinitiator aus Alkalimetallen ausgewählt ist, die in Form des Metalls, eines Alkoholats oder eines Komplexes eingesetzt werden.

**3.** Verfahren nach Anspruch 2, **dadurch gekennzeichnet, dass** das Alkalimetall aus Cäsium und Kalium ausgewählt ist.

**4.** Verfahren nach Anspruch 1, **dadurch gekennzeichnet, dass** das eine radikalisch vernetzbare Funktionalität tragende Oxiran aus Oxiranen der Formel

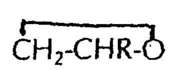

ausgewählt ist, worin R für einen Rest steht, der eine ungesättigte Kohlenstoff-Kohlenstoff-Bindung aufweist, im Speziellen für einen Rest der Formel $CH_2=CH-(CH_2)_q-(O-CH_2)_p$, wobei gilt: $1 \leq q \leq 6$ und p = 0 oder 1, oder der Formel $CH_3-(CH_2)_y-CH=CH-(CH_2)_x-(OCH_2)_p$, wobei gilt: $0 \leq x+y \leq 5$ und p = 0 oder 1.

**5.** Verfahren nach Anspruch 4, **dadurch gekennzeichnet, dass** das Oxiran

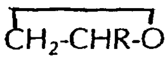

Allylglycidylether oder Epoxyhexen ist.

**6.** Verfahren nach Anspruch 1, **dadurch gekennzeichnet, dass** die Copolymerisation von Ethylenoxid mit zumindest einem Oxiran, das eine radikalisch vernetzbare Funktionalität trägt, in Gegenwart zumindest eines Oxirans

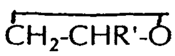

stattfindet, worin R' ein Substituent ist, der keine radikalisch vernetzbare reaktive Funktionalität umfasst.

**7.** Verfahren nach Anspruch 6, **dadurch gekennzeichnet, dass** R' aus Folgenden ausgewählt ist: Alkylresten, vorzugsweise Alkylresten mit 1 bis 16 Kohlenstoffatomen; Alkoxyresten, wie z.B. Resten $-(CH_2)_n-O-((CH_2)_m-O)_p-CH_3$, wobei gilt: $0 \leq n \leq 4$, $1 \leq m \leq 4$ und $0 \leq p \leq 20$; Alkyl(perfluoralkylsulfonat)etherresten; Ionophorfunktionalität enthaltenden Resten, in denen die negative Ladung vom Carbanion Bis(trifluormethylsulfonyl)-methylid $-C(SO_2CF_3)_2M''$ getragen wird, wobei M'' für ein Metallkation, im Speziellen ein einwertiges Kation, wie z.B. ein Alkalimetallkation, steht.

**8.** Verfahren nach Anspruch 1, **dadurch gekennzeichnet, dass** es einen zusätzlichen Schritt umfasst, in dessen Verlauf die Endgruppen des Copolymers deaktiviert werden.

**9.** Copolymer, dessen Kette Ethylenoxideinheiten, Einheiten $-O-CH_2-CHR-$, in denen R ein Substituent ist, der radikalisch vernetzbare reaktive Funktionalitäten umfasst, wobei sich die R von einer Einheit zur anderen unterscheiden, und gegebenenfalls Einheiten $-O-CH_2-CHR'-$ umfasst, in denen R' ein Substituent ist, der keine radikalisch vernetzbare reaktive Funktionalität umfasst, wobei sich die R' von einer Einheit zur anderen unterscheiden können, wobei das Copolymer einen Polymolekularitätsindex $I = Mw/Mn \leq 2{,}2$, ein zahlenmittleres Molekulargewicht $Mn \geq 20.000$ und eine statistische Verteilung der verschiedenen Monomereinheiten aufweist.

**10.** Copolymer nach Anspruch 9, **dadurch gekennzeichnet, dass** es ein mittleres Molekulargewicht $\geq$ 100.000 aufweist.

**11.** Copolymer nach Anspruch 9, **dadurch gekennzeichnet, dass** der Substituent R ein Rest der Formel $CH_2=CH-(CH_2)_q-(O-CH_2)_p$, wobei gilt: $1 \leq q \leq 6$ und p = 0 oder 1, oder der Formel $CH_3-(CH_2)_y-CH=CH-(CH_2)_x-(OCH_2)_p$ ist, wobei gilt: $0 \leq x+y \leq 5$ und p = 0 oder 1.

**12.** Copolymer nach Anspruch 9, **dadurch gekennzeichnet, dass** der Substituent R' aus Folgenden ausgewählt ist: Alkylresten, vorzugsweise Alkylresten mit 1 bis 16 Kohlenstoffatomen; Alkoxyresten, wie z.B. Resten $-(CH_2)_n-O-((CH_2)_m-O)_p-CH_3$, wobei gilt: $0 \leq n \leq 4$, $1 \leq m \leq 4$ und $0 \leq p \leq 20$; Alkyl(perfluoralkylsulfonat)etherresten; Ionophorfunktionalität enthaltenden Resten, in denen die negative Ladung vom Carbanion Bis(trifluormethylsulfonyl)methylid $-C(SO_2CF_3)_2M''$ getragen wird, wobei M'' für ein Metallkation, im Speziellen ein einwertiges Kation, wie z.B. Alkalimetallkation, steht.

**13.** Copolymer nach Anspruch 9, **dadurch gekennzeichnet, dass** es zumindest 70 Mol-% Ethylenoxideinheiten, etwa 2 bis etwa 30 Mol-% Einheiten $-O-CH_2-CHR'-$ und etwa 0,05 bis etwa 10 Mol-% Einheiten $-O-CH_2-CHR-$ umfasst.

**14.** Ionenleitendes Material, das als polymeres Lösungsmittel ein Copolymer umfasst, das Ethylenoxideinheiten, Einheiten $-O-CH_2-CHR-$, in denen R ein Substituent ist, der eine radikalisch vernetzbare Funktionalität umfasst, wobei sich die R von einer Einheit zur anderen unterscheiden können, und gegebenenfalls Einheiten $-O-CH_2-CHR'-$ umfasst, in denen R' ein Substituent ist, der keine radikalisch vernetzbare reaktive Funktionalität umfasst, wobei sich die R' von einer Einheit zur anderen unterscheiden können, und das einen Polymolekularitätsindex $I = Mp/Mn \leq 2{,}2$, eine statistische Verteilung der verschiedenen Monomereinheiten und ein zahlenmittleres Molekulargewicht $Mn \geq 20.000$ aufweist.

**15.** Ionenleitendes Material nach Anspruch 14, **dadurch gekennzeichnet, dass** es außerdem ein leicht dissoziierbares Salz enthält.

**16.** Ionenleitendes Material nach Anspruch 14, **dadurch gekennzeichnet, dass** das Copolymer durch Aufpfropfen ionischer Gruppen auf die reaktiven Funktionalitäten des Substituenten R der Einheiten $-O-CH_2-CHR-$ transformiert ist.

**17.** Ionenleitendes Material nach Anspruch 14, **dadurch gekennzeichnet, dass** das Copolymer Einheiten $-O-CH_2-CHR'-$ umfasst, in denen der Rest R' eine ionische Gruppe umfasst.

**18.** Ionenleitendes Material nach Anspruch 14, **dadurch gekennzeichnet, dass** es mit einem Lösungsmittel gequollen ist.

**19.** Elektrochemische Zelle, worin:

- der Elektrolyt ein ionenleitendes Material umfasst, das als polymeres Lösungsmittel ein Copolymer umfasst, das Ethylenoxideinheiten, Einheiten $-O-CH_2-CHR-$, in denen R ein Substituent ist, der eine radikalisch vernetzbare Funktionalität umfasst, wobei sich die R von einer Einheit zur anderen unterscheiden können, und gegebenenfalls Einheiten $-O-CH_2-CHR'-$ umfasst, in denen R' ein Substituent ist, der keine radikalisch vernetzbare reaktive Funktionalität umfasst, wobei sich die R' von einer Einheit zur anderen unterscheiden können, und das einen Polymolekularitätsindex I = Mp/Mn ≤ 2,2, eine statistische Verteilung der verschiedenen Monomereinheiten und ein zahlenmittleres Molekulargewicht Mn ≥ 20.000 aufweist;
- und/oder zumindest eine der Elektroden eine Verbundelektrode ist, die ein derartiges ionen leitendes Material umfasst.

**20.** Wiederaufladbare oder nicht wiederaufladbare Batterie, die eine negative Elektrode und eine positive Elektrode umfasst, die durch einen polymeren Trokkenelektrolyten getrennt sind, worin:

- der Elektrolyt ein ionenleitendes Material umfasst, das als polymeres Lösungsmittel ein Copolymer umfasst, das Ethylenoxideinheiten, Einheiten $-O-CH_2-CHR-$, in denen R ein Substituent ist, der eine radikalisch vernetzbare Funktionalität umfasst, wobei sich die R von einer Einheit zur anderen unterscheiden können, und gegebenenfalls Einheiten $-O-CH_2-CHR'-$ umfasst, in denen R' ein Substituent ist, der keine radikalisch vernetzbare reaktive Funktionalität umfasst, wobei sich die R' von einer Einheit zur anderen unterscheiden können, und das einen Polymolekularitätsindex I = Mp/Mn ≤ 2,2, eine statistische Verteilung der verschiedenen Monomereinheiten und ein zahlenmittleres Molekulargewicht Mn ≥ 20.000 aufweist;
- und/oder zumindest eine der Elektroden eine Verbundelektrode ist, die ein derartiges ionenleitendes Material umfasst.

**21.** Verwendung eines ionenleitenden Materials, das als polymeres Lösungsmittel ein Copolymer umfasst, das Ethylenoxideinheiten, Einheiten $-O-CH_2-CHR-$, in denen R ein Substituent ist, der eine radikalisch vernetzbare Funktionalität umfasst, wobei sich die R von einer Einheit zur anderen unterscheiden können, und gegebenenfalls Einheiten $-O-CH_2-CHR'-$ umfasst, in denen R' ein Substituent ist, der keine radikalisch vernetzbare reaktive Funktionalität umfasst, wobei sich die R' von einer Einheit zur anderen unterscheiden können, und das einen Polymolekularitätsindex I = Mp/Mn ≤ 2,2, eine statistische Verteilung der verschiedenen Monomereinheiten und ein zahlenmittleres Molekulargewicht Mn ≥ 20.000 aufweist, zur Herstellung von elektrochromen Systemen, Lichtmodulationssystemen, selektiven Membranen oder Bezugsmembranen in Membransensoren.

## Claims

**1.** Process for the preparation of a copolymer, the chain of which comprises ethylene oxide units, $-O-CH_2-CHR-$ units in which R is a substituent comprising a reactive functional group which can crosslink by the radical route, it being possible for R to be different from one unit to another, and optionally $-O-CH_2-CHR'-$ units in which R' is a substituent not comprising a reactive functional group which can crosslink by the radical route, it being possible for R' to be different from one unit to another, the said copolymer having a polydispersity index I=Mp/Mn of less than or equal to 2.2, a number-average molecular mass Mn of greater than or equal to 20 000 and a random distribution of the various monomer units, **characterized in that** it consists in reacting ethylene oxide and one or more substituted oxiranes, at least one of which carries an R substituent comprising a functional group which can crosslink by the radical route, in an aprotic solvent in the presence of an anionic polymerization initiator, the ethylene oxide being distilled beforehand and the oxirane(s) and the solvent being dried beforehand over molecular sieve so as to lower their content of moisture and of impurities to a value of less than or equal to 100 ppm, the reactor used for the polymerization reaction being devoid of traces of moisture and of impurities.

**2.** Process according to Claim 1, **characterized in that** the polymerization initiator is chosen from alkali metals, used in the metallic form, in the alkoxide form or in the complex form.

**3.** Process according to Claim 2, **characterized in that** the alkali metal is chosen from caesium and potassium.

**4.** Process according to Claim 1, **characterized in that** the oxirane carrying a functional group which can crosslink by the radical route is chosen from oxiranes corresponding to the formula $\overline{CH_2-CHR-O}$ in which R represents a radical comprising a carbon-carbon unsaturated bond, more particularly a radical having the formula $CH_2=CH-(CH_2)_q-(O-CH_2)_p$, with $1 \leq q \leq 6$ and p = 0 or 1, or the formula $CH_3-(CH_2)_y-CH=CH-(CH_2)_x-(OCH_2)_p$, with $0 \leq x + y \leq 5$ and p = 0 or 1.

**5.** Process according to Claim 4, **characterized in that** the oxirane $\overline{CH_2\text{- } CHR \text{ - } O}$ is allyl glycidyl ether or epoxyhexene.

**6.** Process according to Claim 1, **characterized in that** the copolymerization of the ethylene oxide with at least one oxirane carrying a functional group which can crosslink by the radical route is carried out in the presence of at least one oxirane $\overline{CH_2\text{- } CHR'\text{-}O}$ in which R' is a substituent not comprising a reactive functional group which can crosslink by the radical route.

**7.** Process according to Claim 6, **characterized in that** R' is chosen from alkyl radicals, preferably from alkyl radicals having from 1 to 16 carbon atoms; from alkoxy radicals, such as-$(CH_2)_n$-O-($(CH_2)_m$-O)$_p$-$CH_3$ radicals, with $0 \leq n \leq 4$, $1 \leq m \leq 4$ and $0 \leq p \leq 20$; from alkyl (perfluoroalkylsulphonate) ether radicals; or from radicals incorporating an ionophore functional group, in which radicals the negative charge is carried by the bis(trifluoromethylsulphonyl)methide carbanion -C$(SO_2CF_3)_2$M", M" representing a metal cation, more particularly a monovalent cation, such as an alkali metal cation.

**8.** Process according to Claim 1, **characterized in that** it comprises an additional stage during which the end functional groups of the copolymer are deactivated.

**9.** Copolymer, the chain of which comprises ethylene oxide units, -O-$CH_2$-CHR- units in which R is a substituent comprising a reactive functional group which can crosslink by the radical route, it being possible for R to be different from one unit to another, and optionally -O-$CH_2$-CHR'- units in which R' is a substituent not comprising a reactive functional group which can crosslink by the radical route, it being possible for R' to be different from one unit to another, the said copolymer having a polydispersity index I=Mp/Mn of less than or equal to 2.2, a number-average molecular mass Mn of greater than or equal to 20 000 and a random distribution of the various monomer units.

**10.** Copolymer according to Claim 9, **characterized in that** it has a number-average molecular mass of greater than or equal to 100 000.

**11.** Copolymer according to Claim 9, **characterized in that** the R substituent is a radical having the formula $CH_2$=CH-$(CH_2)_q$-(O-$CH_2)_p$, with $1 \leq q \leq 6$ and p = 0 or 1, or the formula $CH_3$-$(CH_2)_y$-CH=CH-$(CH_2)_x$-$(OCH_2)_p$, with $0 \leq x + y \leq 5$ and p = 0 or 1.

**12.** Copolymer according to Claim 9, **characterized in that** the R' substituent is chosen from alkyl radicals, preferably from alkyl radicals having from 1 to 16 carbon atoms; from alkoxy radicals, such as -$(CH_2)_n$-O-($(CH_2)_m$-O)$_p$-$CH_3$ radicals, with $0 \leq n \leq 4$, $1 \leq m \leq 4$ and $0 \leq p \leq 20$; from alkyl (perfluoroalkylsulphonate) ether radicals; or from radicals incorporating an ionophore functional group, in which radicals the negative charge is carried by the bis (trifluoromethylsulphonyl)methide carbanion -C $(SO_2CF_3)_2$M", M" representing a metal cation, more particularly a monovalent cation, such as an alkali metal cation.

**13.** Copolymer according to Claim 9, **characterized in that** it comprises at least 70 mol% of ethylene oxide units, from approximately 2 to approximately 30 mol% of -O-$CH_2$-CHR'- units and from approximately 0.05 to approximately 10 mol% of -O-$CH_2$-CHR- units.

**14.** Ionically conducting material comprising, as polymer solvent, a copolymer which comprises ethylene oxide units, -O-$CH_2$-CHR- units in which R is a substituent comprising a functional group which can crosslink by the radical route, it being possible for R to vary from one unit to another, and optionally -O-$CH_2$-CHR'- units in which R' is a substituent not comprising a functional group which can crosslink by the radical route, it being possible for R' to vary from one unit to another, and which has a polydispersity index I=Mp/Mn of less than or equal to 2.2, a random distribution of the various monomer units and a number-average molecular mass at least equal to 20 000.

**15.** Ionically conducting material according to Claim 14, **characterized in that** it additionally comprises a readily dissociable salt.

**16.** Ionically conducting material according to Claim 14, **characterized in that** the copolymer was converted by grafting ionic groups to the reactive functional groups of the R substituent of the -O-$CH_2$-CHR- units.

**17.** Ionically conducting material according to Claim 14, **characterized in that** the copolymer comprises -O-$CH_2$-CHR'- units in which the R' radical comprises an ionic group.

**18.** Ionically conducting material according to Claim 14, **characterized in that** it is swollen by a solvent.

**19.** Electrochemical cell in which:

- the electrolyte comprises an ionically conducting material comprising, as polymer solvent, a copolymer which comprises ethylene oxide units, -O-$CH_2$-CHR- units in which R is a substituent comprising a functional group which can crosslink by the radical route, it being possible for R to vary from one unit to another, and optionally $-O-CH_2-CHR'-$ units in which R' is a substituent not comprising a functional group which can crosslink by the radical route, it being possible for R' to vary from one unit to another, and which has a polydispersity index I=Mp/Mn of less than or equal to 2.2, a random distribution of the various monomer units and a number-average molecular mass at least equal to 20 000;

- and/or at least one of the electrodes is a composite electrode comprising such an ionically conducting material.

**20.** Rechargeable or nonrechargeable electrochemical generator comprising a negative electrode and a positive electrode separated by a solid polymer electrolyte, in which:

- the electrolyte comprises an ionically conducting material comprising, as polymer solvent, a copolymer which comprises ethylene oxide units, $-O-CH_2-CHR-$ units in which R is a substituent comprising a functional group which can crosslink by the radical route, it being possible for R to vary from one unit to another, and optionally $-O-CH_2-CHR'-$ units in which R' is a substituent not comprising a functional group which can crosslink by the radical route, it being possible for R' to vary from one unit to another, and which has a polydispersity index I=Mp/Mn of less than or equal to 2.2, a random distribution of the various monomer units and a number-average molecular mass at least equal to 20 000;
- and/or at least one of the electrodes is a composite electrode comprising such an ionically conducting material.

**21.** Use of an ionically conducting material comprising, as polymer solvent, a copolymer which comprises ethylene oxide units, $-O-CH_2-CHR-$ units in which R is a substituent comprising a functional group which can crosslink by the radical route, it being possible for R to vary from one unit to another, and optionally $-O-CH_2-CHR'-$ units in which R' is a substituent not comprising a functional group which can crosslink by the radical route, it being possible for R' to vary from one unit to another, and which has a polydispersity index I=Mp/Mn of less than or equal to 2.2, a random distribution of the various monomer units and a number-average molecular mass at least equal to 20 000 for the preparation of electrochromic systems, of systems for modulating light, of selective membranes or of reference membranes in membrane sensors.

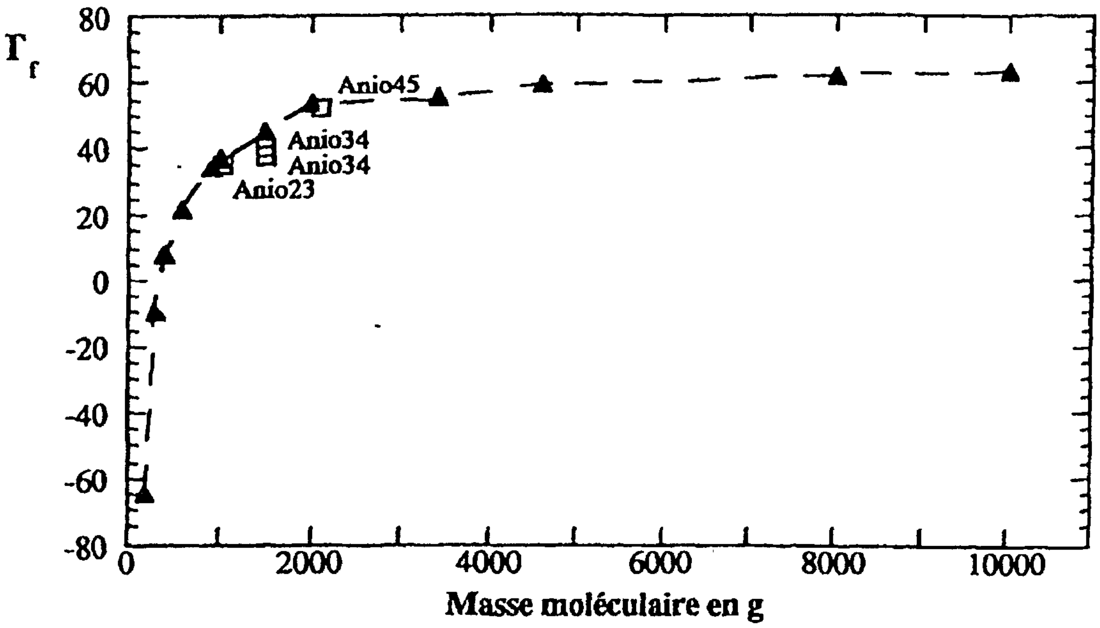
Γf
80
60
40
20
0
-20
-40
-60
-80
0
2000
4000
6000
8000
10000
Masse moléculaire en g
Anio45
Anio34
Anio34
Anio23

FIG. 1

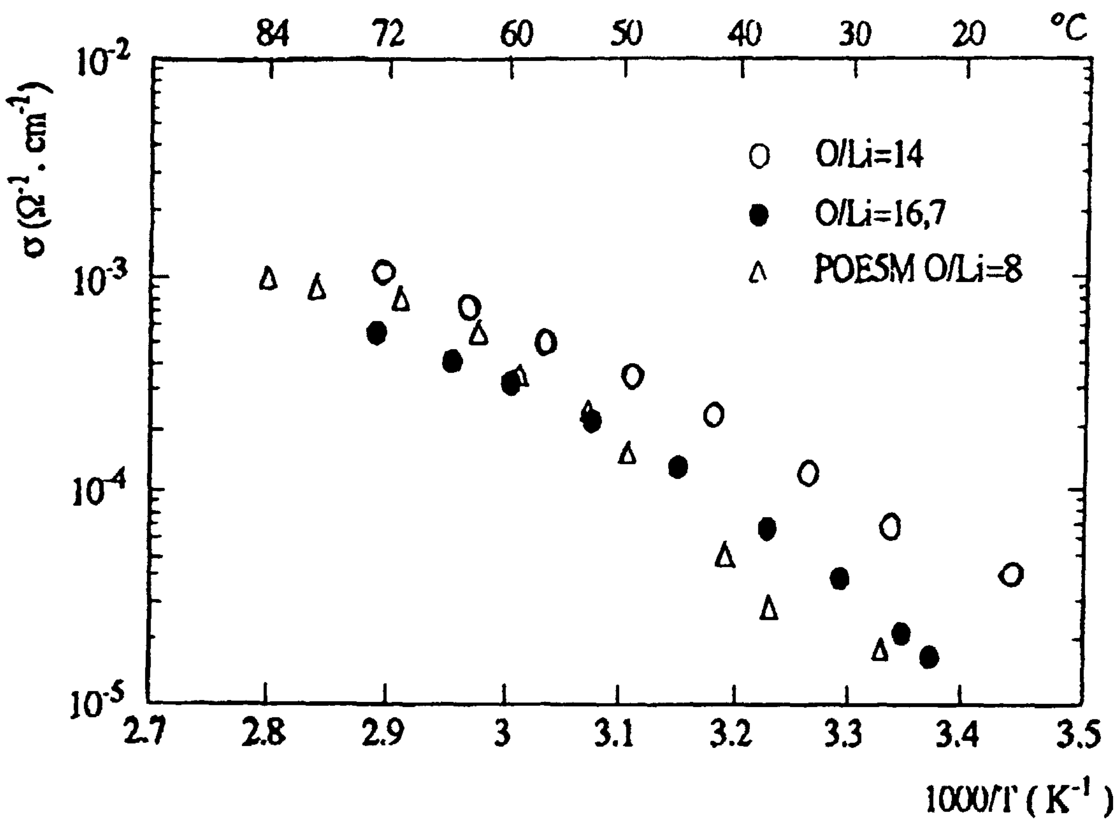
84
72
60
50
40
30
20
°C
$10^{-2}$
$10^{-3}$
$10^{-4}$
$10^{-5}$
$\sigma (\Omega^{-1} . cm^{-1})$
O/Li=14
O/Li=16,7
POE5M O/Li=8
2.7
2.8
2.9
3
3.1
3.2
3.3
3.4
3.5
$1000/T (K^{-1})$

FIG. 2